# FASCICULE DE BREVET EUROPEEN

(11) **EP 3 484 973 B1**
(45) Date de publication et mention de la délivrance du brevet: **23.12.2020**
(21) Numéro de dépôt: 17748530.7
(22) Date de dépôt: 10.07.2017
(51) Int. Cl.: C09J 175/06, B32B 7/12, B32B 15/095, C08G 18/79, C08G 18/42, C08G 18/10, C08G 71/04, C09J 175/04, C09J 175/08

(54) **COMPOSITION ADHESIVE BICOMPOSANTE A BASE DE POLYURETHANE**
ZWEI-KOMPONENTEN-KLEBSTOFFZUSAMMENSETZUNG AUF BASIS VON POLYURETHAN
ADHESIVE DUAL-COMPONENT COMPOSITION BASED ON POLYURETHANE

(30) Priorité: 12.07.2016 FR 1656680
(43) Date de publication de la demande: 22.05.2019
(73) Titulaire: Bostik SA, 92700 Colombes (FR)
(72) Inventeur: MICHAUD, Guillaume, 60200 Compiegne (FR); PEREIRA-BAYART, Marjorie, 60400 Pontoise Les Noyon (FR)
(74) Mandataire: Arkema Patent
(86) Numéro de dépôt international: PCT/FR2017/051887
(87) Numéro de publication internationale: WO 2018/011504

(56) Documents cités:
- WO-A1-2015/140458
- WO-A1-2015/150543
- US-A1- 2007 151 666

## Description

### DOMAINE DE L'INVENTION

La présente invention concerne une composition adhésive bicomposante à base de polyuréthane. L'invention concerne également une structure multicouche (ou complexe), utilisable notamment dans le domaine de l'emballage flexible, qui comprend au moins deux couches de matériau liées entre elles par une couche de la composition adhésive selon l'invention. Elle concerne également un procédé de complexage adapté à la fabrication dudit complexe.

### ARRIERE-PLAN TECHNOLOGIQUE

Les emballages flexibles destinés au conditionnement des produits les plus divers, tels ceux fabriqués pour les industries agroalimentaire, cosmétique ou de la détergence, sont généralement constitués de plusieurs couches minces (sous forme de feuilles ou de films) dont l'épaisseur est comprise entre 5 et 150 µm et qui sont constituées de différents matériaux comme le papier, un métal (par exemple l'aluminium) ou encore par des polymères thermoplastiques. Le film complexe (ou multicouche) correspondant, dont l'épaisseur peut varier de 20 à 400 µm, permet de combiner les propriétés des différentes couches individuelles de matériau et d'offrir ainsi au consommateur un ensemble de caractéristiques adaptées à l'emballage souple final comme, par exemple :
- son apparence visuelle (notamment celle des éléments imprimés présentant l'information concernant le produit emballé et destinée au consommateur),
- un effet de barrière à l'humidité atmosphérique ou à l'oxygène,
- un contact alimentaire sans risques de toxicité ou de modification des propriétés organoleptiques des aliments emballés,
- une résistance chimique pour certains produits tels que le ketchup ou le savon liquide,
- une bonne tenue à température élevée, par exemple en cas de pasteurisation ou de stérilisation.

Pour constituer l'emballage final, le multicouche est généralement mis en forme par thermoscellage, à une température variant d'environ 120 à 250°C, cette dernière technique étant également utilisée pour la fermeture de l'emballage autour du produit destiné au consommateur.

Les diverses couches de matériau qui composent le multicouche sont combinées ou assemblées par contrecollage au cours de procédés industriels de complexage (également dénommés par le terme "lamination").

Ces procédés mettent en œuvre des adhésifs (ou colles) et des dispositifs (ou machines) conçus à cet effet. Le film multicouche ainsi obtenu est souvent lui-même qualifié par le terme "laminé".

Ces procédés comprennent tout d'abord une étape d'enduction de l'adhésif sur une première couche de matériau, qui consiste en un dépôt d'une couche de colle continue et d'épaisseur contrôlée généralement inférieure à 10 µm, correspondant à une quantité de colle (ou grammage) également contrôlée, ne dépassant pas en général 10 g/m². Cette étape d'enduction est suivie d'une étape de contrecollage d'une deuxième couche de matériau, identique ou différent du premier, consistant en l'application sous pression de cette deuxième couche de matériau sur la première couche de matériau recouvert de la couche de colle.

Les adhésifs à base de polyuréthane à terminaisons NCO sont couramment utilisés pour ce type d'application.

Toutefois, des compositions à base de polyuréthane à terminaisons NCO présentent en général l'inconvénient de comporter des teneurs résiduelles importantes en diisocyanate aromatique provenant de la réaction de synthèse du polyuréthane, susceptibles de conduire à un certain nombre d'inconvénients, notamment des problèmes de toxicité. En effet, le non-étiquetage des polyuréthanes nécessite des teneurs résiduelles en diisocyanate inférieures à 0,1% en poids. Afin d'obtenir des teneurs résiduelles aussi faibles, les procédés de production peuvent être contraignants. En outre, il a été observé que les compositions de polyuréthane possédant une teneur en monomère MDI (diisocyanate aromatique) inférieure ou égale à 1% en poids par rapport au poids de la composition de polyuréthane, sont hautement visqueuses à température ambiante et présentent des problèmes de stabilité dans le temps en termes de viscosité.

Le document US 2007/0151666 décrit une composition adhésive comprenant un premier constituant A à base d'un composé présentant au moins deux groupements cyclocarbonates et un deuxième constituant B à base d'un composé présentant au moins deux groupements amine primaire et/ou secondaire. Les compositions décrites dans ce document ne permettent pas d'obtenir une structure multicouche résistant à un traitement thermique à haute température, tel qu'une stérilisation. En particulier, il a été observé que la structure multicouche obtenue avec de telles compositions présente, après traitement thermique dans une autoclave, des signes de dégradation du joint adhésif (présence de boursouflures, bulles et/ou déréticulation du joint adhésif), rendant en particulier ledit multicouche impropre à la fabrication d'emballages flexibles destinés au conditionnement de produits.

Le document WO 2015/140458 A1 décrit un procédé de préparation d'un prépolymère de polyuréthane à terminaisons (2-oxo-1,3-dioxolan-4-yl)méthyl-carbamate) (PP2).

Le document WO 2015/150543 A1 décrit un système de liant comprenant les composants (A) et (B), ledit composant (A) comprenant au moins un composé portant au moins deux groupes carbonate cycliques et au moins un composé portant au moins deux groupes époxyde ; et ledit composant (B) comprenant un groupe portant au moins un groupement (-NHR-), R étant H, un alkyl ou un radical aryle.

Le but de la présente invention est de fournir une composition adhésive à base de polyuréthane, substantiellement voire totalement exempte de monomères polyiisocyanates résiduels, en particulier de type diisocyanate aromatique (composé où la fonction NCO est directement liée à un cycle aromatique), et qui présente une meilleure tenue thermique, en particulier qui présente un meilleur comportement vis-à-vis du test de stérilisation.

### RESUME DE L'INVENTION

Un premier objet de la présente invention concerne une composition adhésive consistant en
- une composition A consistant en :
   - au moins un prépolymère polyuréthane à terminaison cyclocarbonate ;
   - optionnellement au moins un catalyseur de réticulation,
   - optionnellement au moins une charge minérale,
   - optionnellement au moins un promoteur d'adhésion choisi parmi le groupe consistant en les silanes, les aminosilanes ou les acryloyl silanes,
   - optionnellement au moins un additif choisi parmi le groupe consistant des antioxydants ou stabilisants ultra-violet, des pigments et des colorants, et
      au moins un solvant choisi parmi les solvants organiques et alcooliques et
- une composition B consistant en :
   - au moins une diamine B1 comprenant uniquement deux groupements -CH2-NH2 et au moins une polyamine B2 comprenant au moins trois groupements -CH2-NH2, présents dans un ratio massique diamine B l:polyamine B2 de 30/70 à 70/30,
   - optionnellement au moins un catalyseur de réticulation,
   - optionnellement au moins une charge minérale,
   - optionnellement au moins un promoteur d'adhésion choisi parmi le groupe consistant en les silanes, les aminosilanes ou les acryloyl silanes,
   - optionnellement au moins un additif choisi parmi le groupe consistant des antioxydants ou stabilisants ultra-violet, des pigments et des colorants,
   dans laquelle le rapport molaire du nombre de fonctions amine primaire sur le nombre de fonctions cyclocarbonate va de 0,8 à 1,2 ;
   la composition adhésive comprenant jusqu'à 2 % en poids, par rapport au poids total de la composition adhésive, dudit au moins un additif, si présent ; et
   ledit prépolymère polyuréthane à terminaison cyclocarbonate étant préparé par un procédé comprenant les étapes suivantes :
   E1) la préparation d'un prépolymère polyuréthane à terminaisons NCO par une réaction de polyaddition :
      i) d'au moins un polyisocyanate choisi parmi les diisocyanates et les triisocyanates,
      ii) avec au moins un polyol choisi parmi les polyéther polyols et les polyester polyols, et leurs mélanges ; suivie de
   E2) la réaction du produit formé à la première étape E1) avec au moins un cyclocarbonate de glycérol en une quantité telle que l'ensemble des groupes NCO présents dans le milieu réactionnel à l'issue de l'étape E1) réagissent en présence du carbonate de glycérol.

Le prépolymère polyuréthane à terminaison cyclocarbonate est obtenu par réaction d'un polyuréthane à terminaisons NCO et d'un cyclocarbonate de glycérol.

Le prépolymère polyuréthane à terminaison cyclocarbonate est préparé par un procédé comprenant les étapes suivantes :
E1) la préparation d'un prépolymère polyuréthane à terminaisons NCO par une réaction de polyaddition :
   i) d'au moins un polyisocyanate choisi parmi les diisocyanates et les triisocyanates,
   ii) avec au moins un polyol choisi parmi les polyéther polyols et les polyester polyols, et leurs mélanges ; suivie de
E2) la réaction du produit formé à la première étape E1) avec au moins un cyclocarbonate de glycérol en une quantité telle que l'ensemble des groupes NCO présents dans le milieu réactionnel à l'issue de l'étape E1) réagissent en présence du carbonate de glycérol.

De préférence, au moins un polyol est choisi parmi les polyester polyols.

Selon un mode de réalisation, la diamine B1 ou le mélange de diamines B1 présente une alcalinité primaire allant de 3,00 à 20,00 méq/g, de préférence allant de 9,00 à 15,00 méq/g.

Selon un mode de réalisation, la polyamine B2 ou le mélange de polyamine B2 présente une alcalinité primaire 8,00 à 21,00 méq/g, de préférence allant de 9,00 à 18,00 méq/g.

Selon un mode de réalisation, la composition B présente un ratio alcalinité primaire sur alcalinité totale allant de 0,25 à 0,70.

Le rapport molaire du nombre de fonctions amine primaire sur le nombre de fonctions cyclocarbonate va de 0,8 à 1,2, de préférence de 0,9 à 1,1.

Selon un mode de réalisation, la composition adhésive comprend en outre au moins un catalyseur de réticulation.

L'invention concerne également un kit prêt à l'emploi comprenant la composition adhésive selon l'invention, caractérisé en ce que les compositions A et B sont conditionnées dans deux compartiments distincts.

L'invention a également pour objet une structure multicouche comprenant au moins deux couches de matériau liées entre elles par une couche adhésive, caractérisé en ce que ladite couche adhésive est constituée par la composition adhésive selon l'invention, à l'état réticulé.

Selon un mode de réalisation, la couche adhésive présente une épaisseur allant de 1,5 à 5 µm.

Selon un mode de réalisation, la structure multicouche comprend au moins une couche de matériau à base d'aluminium.

L'invention a également pour objet un procédé de fabrication d'une structure multicouche selon l'invention, comprenant les étapes suivantes :
- le mélange de la composition A et de la composition B, puis
- l'enduction dudit mélange sur la surface d'une première couche de matériau, puis
- le contrecollage de la surface d'une deuxième couche de matériau sur ladite surface enduite, puis
- la réticulation dudit mélange.

Selon un mode de réalisation du procédé de fabrication, le mélange de la composition A et de la composition B comprend au moins un solvant et le procédé comprend en outre une étape d'évaporation du ou des solvants.

La composition adhésive selon l'invention peut être utilisée pour la fabrication de complexes présentant des couches (substrats) de différentes natures, en particulier pour la fabrication de structures multicouches haut de gamme comprenant des couches de matériau difficile à coller entre eux.

Les complexes selon l'invention présentent une tenue thermique améliorée, en particulier ils sont plus résistants au test de stérilisation.

Les complexes selon l'invention peuvent être utilisés dans des emballages alimentaires, sans risque de toxicité.

### EXPOSE DETAILLE DES MODES DE REALISATION DE L'INVENTION

Dans la présente demande, en l'absence d'indication contraire :
- les quantités exprimées sous la forme de pourcentage correspondent à des pourcentages poids/poids ;
- par groupe cyclocarbonate, on entend désigner le groupe (2-oxo-1,3-dioxolan-4-yl)méthyl-carbamate), c'est-à-dire un groupe monovalent répondant à la formule suivante : 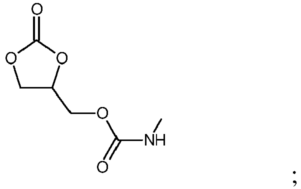
- par « prépolymère de polyuréthane », on désigne un intermédiaire de synthèse d'un polyuréthane, correspondant à un polymère comprenant dans sa chaîne principale au moins deux groupes uréthane et au moins deux fonctions réactives (par exemple isocyanate ou cyclocarbonate) lui permettant de subir au moins une réaction de polyaddition. Un tel prépolymère de polyuréthane est susceptible d'être obtenu par réaction de polyaddition d'au moins un polyol avec au moins un polyisocyanate.

En particulier, on désigne par « prépolymère de polyuréthane à terminaisons NCO », un prépolymère de polyuréthane comprenant au moins deux groupes isocyanate (NCO) lui permettant de subir une réaction de polyaddition en présence d'un carbonate de glycérol. Un tel prépolymère de polyuréthane à terminaisons NCO est susceptible d'être obtenu par réaction de polyaddition d'au moins un polyol avec un excès stoechiométrique de polyisocyanate(s). Cet excès stoechiométrique peut être traduit par un rapport molaire NCO/OH strictement supérieur à 1, qui correspond au rapport molaire du nombre de groupes isocyanates (NCO) sur le nombre de groupes hydroxyles (OH) portés par les espèces porteuses de telles fonctions présentes dans le milieu réactionnel de la préparation du polyuréthane.

En particulier, on désigne par « prépolymère de polyuréthane à terminaisons cyclocarbonate », un prépolymère de polyuréthane comprenant au moins deux groupes cyclocarbonate, lui permettant de subir une réaction de polyaddition en présence d'une polyamine. Un tel polyuréthane à terminaisons cyclocarbonate est obtenu par fonctionnalisation complète des groupes isocyanate d'un polyisocyanate à l'aide de carbonate de glycérol. La fonctionnalisation complète des groupes isocyanate par du carbonate de glycérol peut être obtenue en mélangeant les réactifs en quantité stoechiométrique ou avec un excès stoechiométrique de carbonate de glycérol. Ceci se traduit par un rapport molaire NCO/OH inférieur ou égal à 1.
- le rapport molaire NCO/OH (noté r1 pour la préparation du prépolymère à terminaisons NCO), correspond au rapport molaire du nombre de groupes isocyanates sur le nombre de groupes hydroxyles portés respectivement par l'ensemble des isocyanate(s) et polyol(s) présents dans le milieu réactionnel de l'étape E1.
- le rapport molaire NCO/OH (noté r2 pour la préparation du prépolymère à terminaisons cyclocarbonate, correspond au rapport molaire du nombre de groupes isocyanates non réagis à l'issue de l'étape précédente (E1) sur le nombre de groupes hydroxyles portés respectivement par l'ensemble des isocyanate(s) et alcool(s) présents dans le milieu réactionnel de l'étape E2.
- l'indice hydroxyle d'un composé alcoolique (en particulier polyol ou carbonate de glycérol pouvant être pur ou sous forme de mélange) représente le nombre de fonctions hydroxyles par gramme de produit, et est exprimé dans le texte de la présente demande sous la forme du nombre équivalent de milligrammes de potasse (KOH) utilisés dans le dosage des fonctions hydroxyles, par gramme de produit.
- l'alcalinité primaire représente le nombre de fonctions -NH2 par gramme de produit, et est exprimé dans le texte de la présente demande sous la forme du nombre de milliéquivalents de -NH2 par gramme de produit. Il peut être mesuré par RMN ou par potentiométrie selon des méthodes bien connues de l'homme du métier.
- l'alcalinité totale représente le nombre de fonctions aminées (de type amine primaire, secondaire et tertiaire) par gramme de produit, et est exprimé dans le texte de la présente demande sous la forme de milliéquivalent de HCl par gramme de produit. L'alcalinité totale peut être déterminée par RMN ou dosage potentiométrique.
- le rapport molaire NH2/CycloCarbonate (CC), noté r3, correspond au rapport molaire du nombre de groupes NH2 sur le nombre de groupes cyclocarbonate dans la composition adhésive.
- la mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn). La viscosité d'un produit est de préférence mesurée au moins 24 heures après fabrication dudit produit.
- les différents modes de réalisations décrits dans la présente demande peuvent être combinés entre eux.

La présente invention concerne une composition adhésive bicomposante.

### Composition A

Le prépolymère de polyuréthane à terminaisons cyclocarbonate peut représenter de 10% à 100% en poids de la composition A, de préférence de 20% à 95% en poids, plus préférentiellement de 30% à 90% en poids, et mieux encore de 40% à 80% en poids, par rapport au poids total de la composition A.

Le prépolymère de polyuréthane à terminaisons cyclocarbonate utilisé selon l'invention est préparé par un procédé comprenant les étapes suivantes :
E1) la préparation d'un prépolymère de polyuréthane à terminaisons NCO par une réaction de polyaddition :
   i) d'au moins un polyisocyanate choisi parmi les diisocyanates et les triisocyanates,
   ii) avec au moins un polyol choisi parmi les polyéther polyols et les polyester polyols, et leurs mélanges ; suivie de
E2) la réaction du produit formé à la première étape E1) avec au moins un carbonate de glycérol en une quantité telle que l'ensemble des groupes NCO présents dans le milieu réactionnel à l'issue de l'étape E1) réagisse en présence du carbonate de glycérol.

Lors de l'étape E1), on utilise généralement des quantités de polyisocyanate et de polyol telles que l'ensemble des groupes OH réagisse en présence du (des) polyisocyanate(s) présents dans le milieu réactionnel, conduisant de préférence à un rapport molaire r1 NCO/OH allant de 1,6 à 1,9.

Lors de l'étape E1), la réaction de polyaddition est mise en œuvre à une température de préférence inférieure à 95°C et dans des conditions de préférence anhydres.

Lors de l'étape E2), on utilise généralement une quantité de carbonate de glycérol (aussi nommé 4-(hydroxymethyl)-1,3-dioxolan-2-one) conduisant à un rapport molaire r2 NCO/OH allant de 0,9 à 1,0, de préférence de 0,95 à 1,0.

Lors de l'étape E2), la réaction de polyaddition est mise en œuvre à une température de préférence inférieure à 95°C et dans des conditions de préférence anhydres.

Le(s) polyol(s) utilisable(s) pour préparer le prépolymère de polyuréthane à terminaisons NCO utilisé selon l'invention peu(ven)t être choisi(s) parmi ceux dont la masse molaire moyenne en nombre va de 300 à 4000 g/mol, de préférence de 400 à 3000 g/mol, et mieux encore de 500 à 2000 g/mol.

De préférence, leur fonctionnalité hydroxyle va de 2 à 3. La fonctionnalité hydroxyle est le nombre moyen de fonction hydroxyle par mole de polyol.

De préférence, le(s) polyol(s) utilisable(s) selon l'invention présente(nt) un indice hydroxyle (IOH) (moyen) allant de 20 à 600 milligrammes de KOH par gramme de polyol (mg KOH/g), de préférence de 35 à 430 mg KOH/g, de préférence encore de 55 à 340 mg KOH/g. Selon un mode de réalisation particulier, l'indice hydroxyle de polyol(s) présentant une fonctionnalité hydroxyle de 2 va de 20 à 380 mg KOH/g, de préférence de 35 à 290 mg KOH/g, de préférence encore de 50 à 230 mg KOH/g. Selon un mode de réalisation, l'indice hydroxyle de polyol(s) présentant une fonctionnalité hydroxyle de 3 va de 40 à 570 mg KOH/g, de préférence de 55 à 430 mg KOH/g, de préférence encore de 80 à 340 mg KOH/g.

Le ou les polyols peuvent être choisis parmi les polyéther polyols, les polyester polyols et les mélanges de polyéther polyols et de polyester polyols, de préférence parmi les mélanges de polyéther polyols et de polyester polyols. Ainsi, selon ce mode de réalisation, le prépolymère polyuréthane à terminaisons cyclocarbonate présente à la fois des motifs polyéthers et des motifs polyesters.

Le(s) polyéther polyol(s) utilisable(s) selon l'invention est (sont) de préférence choisi(s) parmi les polyoxyalkylène-polyol, dont la partie alkylène, linéaire ou ramifiée, comprend de 2 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène-diols ou polyoxyalkylène triols, dont la partie alkylène, linéaire ou ramifiée, comprend de 1 à 4 atomes de carbone, plus préférentiellement de 2 à 3 atomes de carbone.

A titre d'exemple de polyoxyalkylène diols ou triols utilisables selon l'invention, on peut citer :
- les polyoxypropylène diols ou triols (aussi désignés par polypropylène glycol (PPG) diols ou triols) ayant une masse molaire moyenne en nombre allant de 300 à 4000 g/mol ;
- les polyoxyéthylène diols ou triols (aussi désignés par polyéthylène glycol (PEG) diols ou triols) ayant une masse molaire moyenne en nombre allant de 300 à 4000 g/mol;
- et leurs mélanges.

Les polyéther polyols sus-cités sont préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination « Voranol® P 400 » par la société Dow de masse molaire moyenne en nombre voisine de 400 g/mol et dont l'indice hydroxyle va de 250 à 270 mg KOH/g.

A titre d'exemple de polyéther triol, on peut citer le polyoxypropylène triol commercialisé sous la dénomination « Voranol® CP 450 » par la société Dow, de masse molaire moyenne en nombre voisine de 450 g/mol et dont l'indice hydroxyle va de 370 à 396 mg KOH/g.

Les polyester polyols peuvent être choisis parmi les polyester diols et les polyester triols, et de préférence parmi les polyester diols.

A titre d'exemple de polyester diol, on peut citer le « Realkyd® XTR 10410 » commercialisé par la société Arkema de masse molaire moyenne en nombre voisine de 1000 g/mol et dont l'indice hydroxyle va de 108 à 116 mg KOH/g. Il s'agit d'un produit issu de la condensation d'acide adipique, de diéthylèneglycol et de monoéthylèneglycol.

Le(s) polyisocyanate(s) utilisable(s) pour préparer le polyuréthane utilisé selon l'invention peuvent être ajoutés séquentiellement ou mis à réagir sous la forme de mélange.

Le(s) diisocyanate(s) utilisable(s) lors de l'étape E1) peu(ven)t être de formule OCN-R¹-NCO où R¹ représente un radical divalent alkylène linéaire, ramifié ou cyclique comprenant de 5 à 140 atomes de carbone, de préférence de 6 à 70 atomes de carbone, de préférence encore de 7 à 40 atomes de carbone, encore plus préférentiellement de 8 à 24 atomes de carbone.

Selon un mode de réalisation, R¹ est choisi parmi l'un des radicaux divalents suivants dont les formules ci-dessous font apparaître les 2 valences libres :
a) le radical divalent dérivé de l'isophorone : 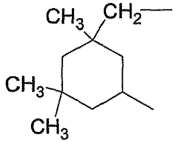
b) le radical dérivé 4,4'-HMDI : 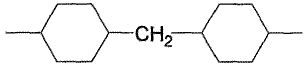
c) le radical divalent dérivé du 2,4-TDI ou du 2,6-TDI : 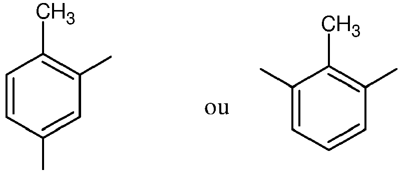
d) le radical divalent dérivé du 2,4'-MDI ou du 4,4'-MDI : 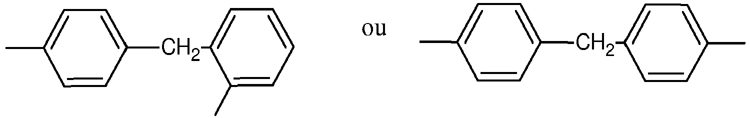
e) le radical divalent -(CH₂)₆- (ou radical hexaméthylène), qui est dérivé de l'hexadiméthylène diisocyanate (HDI)
f) le radical divalent dérivé du xylène diisocyanate (tel que le m-XDI) : 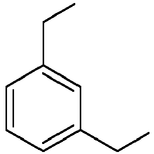
g) le radical divalent dérivé du tétraméthylxylène diisocyanate (tel que le m-TMXDI) : 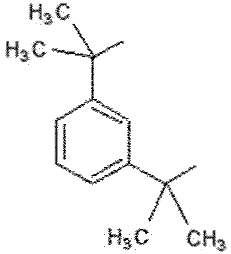
h) le radical divalent dérivé d'un allophanate issu d'un diisocyanate de formule NCO-R¹-NCO, tel que par exemple le radical divalent dérivé d'un allophanate de HDI de formule (Y) suivante : 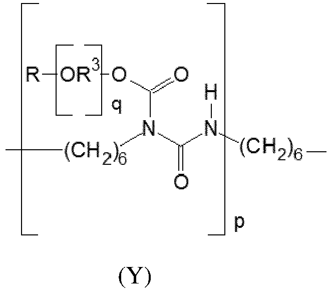 dans laquelle :
   - p est un nombre entier allant de 1 à 2 ;
   - q est un nombre entier allant de 0 à 9, et de préférence 2 à 5 ;
   - R représente une chaine hydrocarbonée, saturée ou insaturée, cyclique ou acyclique, linéaire ou ramifiée, comprenant de 1 à 20 atomes de carbone, de préférence de 6 à 14 atomes de carbone ;
   - R³ représente un groupe divalent alkylène, linéaire ou ramifié, ayant de 2 à 4 atomes de carbones, et de préférence un groupe divalent propylène ;

De préférence, p, q, R et R³ sont choisis tel que le dérivé d'allophanate de HDI ci-dessus comprend une teneur en groupe isocyanate NCO allant de 12 à 14% en poids par rapport au poids dudit dérivé.

Le(s) triisocyanate(s) utilisable(s) selon l'invention peu(ven)t être choisi(s) parmi les isocyanurates, les biurets, et les adduits de diisocyanates et de triols.

En particulier, le(s) isocyanurate(s) peuvent être utilisé(s) sous la forme d'un mélange technique de (poly)isocyanurate(s) de pureté supérieure ou égale à 70% en poids isocyanurate(s).

De préférence, le(s) isocyanurate(s) de diisocyanate utilisable(s) selon l'invention répond(ent) à la formule générale (W) suivante : 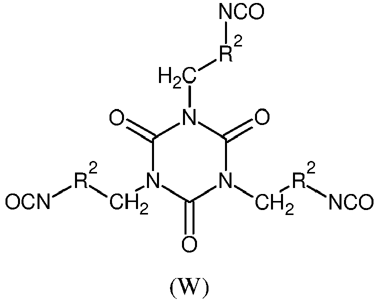 dans laquelle :
R² représente un groupe alkylène, linéaire, ramifié ou cyclique, aliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple de trimères de diisocyanates utilisables selon l'invention, on peut citer :
- le trimère isocyanurate d'hexaméthylène diisocyanate (HDI) : 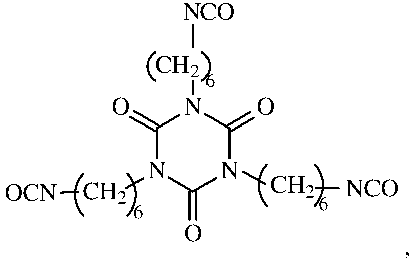
- le trimère isocyanurate d'isophorone diisocyanate (IPDI) : 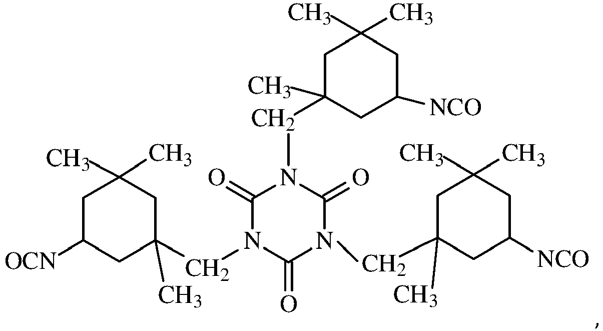
- le trimère isocyanurate de pentaméthylène diisocyanate (PDI) : 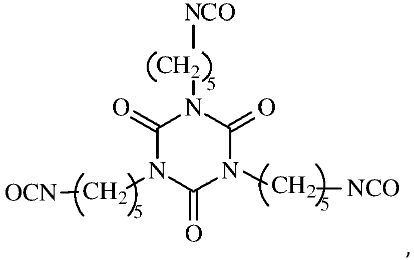
- le trimère isocyanurate du méta-xylène diisocyanate (m-XDI) : 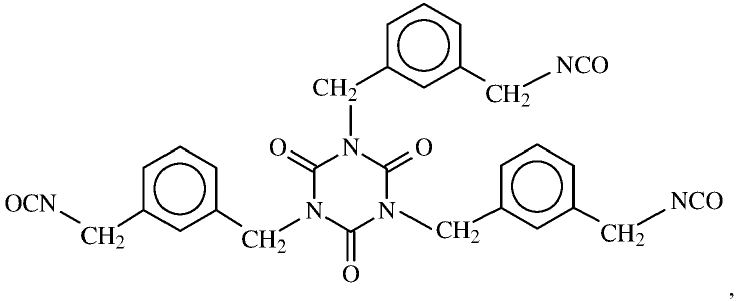
- le trimère isocyanurate du m-XDI, sous forme hydrogénée :

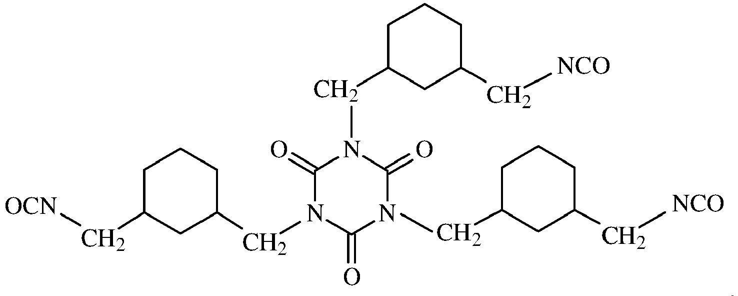

Le(s) diisocyanate(s) utilisable(s) pour préparer les adduits de diisocyanate et triol est (sont) de préférence choisi(s) parmi les monomères de diisocyanates aromatiques ou aliphatiques, et leurs mélanges, et plus préférentiellement les monomères diisocyanates aliphatiques. Le(s) monomère(s) de diisocyanate peu(ven)t être sous forme d'isomère pure ou sous forme de mélange d'isomères.

A titre de triols utilisables pour préparer les adduits de diisocyanate et triol, on peut citer par exemple le Glycérol, Triméthylolméthane (TMM), Triméthyloléthane (TME) et Triméthylolpropane (TMP). De préférence, on utilise le TMP.

A titre d'exemple d'adduits de diisocyanates et de triols utilisables selon l'invention, on peut citer l'adduit de méta xylène diisocyanate et de triméthylolpropane, tel que représenté ci-dessous.

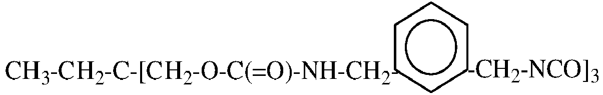

Le(s) polyisocyanate(s) utilisable(s) pour préparer le polyuréthane utilisé selon l'invention sont largement disponibles dans le commerce. A titre d'exemple, on peut citer le « Scuranate® TX » commercialisé par la société Vencorex, correspondant à un 2,4-TDI de pureté de l'ordre de 95%, le « Scuranate® T100 » commercialisé par la société Vencorex, correspondant à un 2,4-TDI de pureté supérieure à 99% en poids, le « Desmodur® I » commercialisé par la société Covestro, correspondant à un IPDI ou encore le « Desmodur® N3300 » commercialisé par la société Covestro, correspondant à un isocyanurate de HDI.

De préférence, les quantités de polyisocyanate(s) et de polyol(s) utilisées lors de l'étape E1) sont telles que le rapport molaire NCO/OH, noté r1, va de 1,6 à 1,9, et de préférence de 1,65 à 1,85.

Lorsque le prépolymère de polyuréthane à terminaisons cyclocarbonate est obtenu lors de l'étape E1) à partir d'un mélange de polyisocyanates ou de plusieurs polyisocyanates ajoutés successivement, le calcul du rapport r1 tient compte d'une part des groupes NCO portés par l'ensemble des polyisocyanates présents dans le milieu réactionnel de l'étape E1, et d'autre part des groupes OH portés par le(s) polyol(s) présent(s) dans le milieu réactionnel de l'étape E1).

La réaction de polyaddition de l'étape E1 peut être mise en œuvre en présence ou non d'au moins un catalyseur de réaction.

Le(s) catalyseur(s) de réaction utilisable(s) au cours de la réaction de polyaddition de l'étape E1 peu(ven)t être tout catalyseur connu de l'homme du métier pour catalyser la formation de polyuréthane par réaction d'au moins un polyisocyanate avec au moins un polyol choisi parmi les polyéther polyols et les polyester polyols.

Une quantité allant jusque 0,3% en poids de catalyseur(s) par rapport au poids du milieu réactionnel de l'étape E1 peut être utilisée. En particulier, on préfère utiliser de 0,02 à 0,2% en poids de catalyseur(s) par rapport au poids du milieu réactionnel de l'étape E1.

De préférence, le prépolymère de polyuréthane à terminaisons NCO est obtenu par polyaddition d'un ou deux polyisocyanates aromatiques ou aliphatiques tels que décrits dans l'un quelconque des paragraphes précédents, avec un ou deux polyols choisis parmi les polyéther polyols et les polyester polyols, en présence d'au moins un catalyseur de réaction, à une température de réaction T1 inférieure à 95°C et de préférence allant de 65°C et 80°C, dans des conditions anhydres, et dans des quantités de diisocyanate(s) et de polyol(s) conduisant de préférence à un rapport molaire NCO/OH, r1, allant de 1,6 à 1,9, de préférence de 1,65 à 1,85.

Le carbonate de glycérol utilisable selon l'invention peut être mis en œuvre soit pur, soit sous la forme d'un mélange ou une composition de carbonate de glycérol contenant de préférence au moins 90% en poids de carbonate de glycérol et de préférence au plus 3% en poids de composé(s) polyol(s) résiduel(s) (glycérine) issu(s) de la synthèse dudit carbonate de glycérol. Dans ce dernier cas, la teneur en composé(s) polyol(s) résiduel(s) (glycérine) issu(s) de la synthèse dudit carbonate de glycérol est telle que l'indice hydroxyle moyen de ladite composition de carbonate de glycérol va de 475 à 510 mg KOH/g de composition.

De telles compositions sont disponibles dans le commerce sous le nom de Jeffsol® Glycerine Carbonate, auprès de la société Huntsman.

La quantité de carbonate de glycérol utilisée lors de l'étape E2 est telle que le rapport molaire NCO/OH, noté r2, va de 0,9 à 1, et de préférence de 0,95 à 1,0.

Lorsque le carbonate de glycérol utilisé est sous la forme d'une composition ou mélange comme décrit plus haut, le calcul du rapport r2 tient compte d'une part des groupes NCO portés par l'ensemble des isocyanates présents dans le milieu réactionnel de l'étape E2 (prépolymère de polyuréthane à terminaisons NCO et éventuellement les polyisocyanates non réagis ayant servis à sa synthèse) et d'autre part des groupes OH portés par le carbonate de glycérol, mais également le(s) composé(s) polyol(s) résiduel(s) (glycérine) éventuellement en mélange avec le carbonate de glycérol.

Selon un mode de réalisation plus préféré du procédé de préparation d'un prépolymère de polyuréthane à terminaisons cyclocarbonate, celui-ci consiste en une première étape E1 et en une deuxième étape E2, telles que définies dans l'un quelconque des paragraphes précédents.

La composition A comprend en outre au moins un solvant, de préférence en une quantité allant de 10% à 50% en poids, plus préférentiellement allant de 15% à 40% en poids, et mieux encore allant de 20 à 30% en poids, par rapport au poids total de la composition A.

Le solvant est choisi parmi les solvants organiques et alcooliques tels que l'acétate d'éthyle, la méthyl éthyl cétone, le xylène, l'éthanol, l'isopropanol, le tétrahydrofurane, le méthyl-tétrahydrofurane, ou encore parmi l'Isane® (à base d'isoparaffines, disponible auprès de la société Total) ou l'Exxol® D80 (à base d'hydrocarbures aliphatiques, disponible auprès de la société ExxonMobil Chemical).

Selon un mode de réalisation, la composition A possède une viscosité mesurée à température ambiante (23°C) allant de 500 à 10000 mPa.s, de préférence allant de 1000 à 5000 mPa.s.

### Composition B

La composition B comprend au moins une diamine B1 et au moins une polyamine B2.

La ou les diamines B1 comprennent uniquement deux groupements -CH2-NH2. De préférence, la ou les diamines B1 répondent à l'une des formules (II) ou (III) ci-dessous : 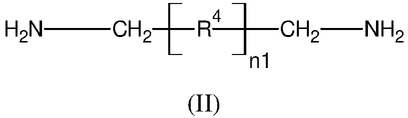 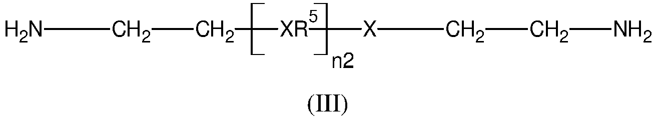 dans lesquelles :
R⁴ est un radical divalent alkylène linéaire, ramifié, alicyclique ou aromatique tel que la masse molaire de la diamine B1 va de 100 à 600 g/mole ;
R⁵ représente un radical divalent alkylène linéaire ou ramifié comprenant de 2 à 4 atomes de carbone, préférentiellement de type éthylène et/ou propylène, avec X = O, S, NH ou NR⁶ dans lequel R⁶ est un groupe alkyle linéaire ou ramifié, saturé ou insaturé, en C₁-C₂₀.
n1 et n2 sont des nombres entiers tels que la masse molaire de la diamine B1 va de 100 à 600 g/mole.

A titre d'exemple de diamines B1, on peut citer la diéthylènetriamine (DETA) répondant à la formule : H₂N-CH₂-CH₂-NH-CH₂-CH₂-NH₂ ayant une alcalinité primaire de 19,39 méq/g, la 1,10-décanediamine H₂N-(CH₂)₁₀-NH₂ ayant une alcalinité primaire de 11,61 méq/g, ou encore la polyétherdiamine de formule : H₂N-CH₂-CH₂-O-CH₂-CH₂-O-CH₂-CH₂-NH₂ ayant une alcalinité primaire de 13,49 méq/g (disponible sous la dénomination commerciale Jeffamine® ED 148 auprès de la société Huntsman).

D'autres exemples de diamines B1 qui peuvent être utilisés sont les amines grasses dimères comportant deux groupes amine primaire d'alcalinité primaire allant de 3,39 méq/g à 3,70 méq/g. Ces amines grasses dimères peuvent être obtenues à partir d'acides gras dimérisés correspondants. A titre d'exemple de telles amines grasses dimères, on peut citer la Priamine® 1071 (disponible auprès de la société Croda) ou celles répondant aux formules suivantes :

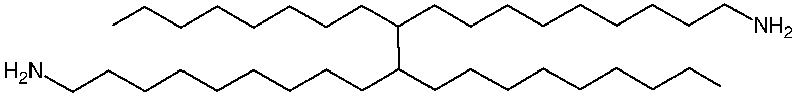

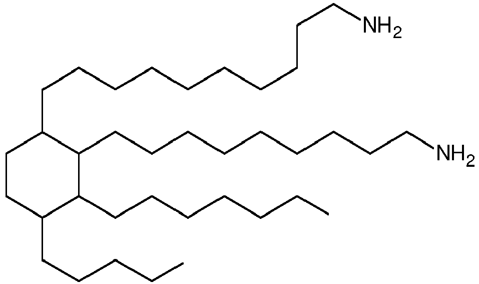

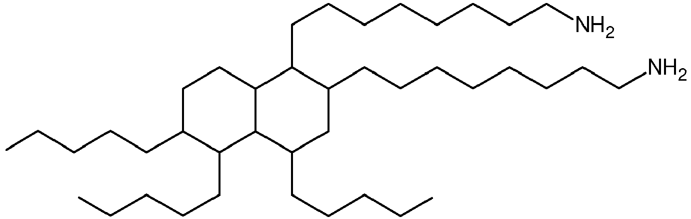

Les acides gras dimères utilisés pour préparer les amines grasses sus-cités sont obtenus par polymérisation à haute température et sous pression d'acides gras insaturés monocarboxyliques (acide monomère), comprenant de 6 à 22 atomes de carbone, de préférence de 12 à 20 atomes de carbone, et proviennent de sources végétales ou animales. On peut citer comme exemple de tels acides gras insaturés, les acides en C18 ayant une ou deux doubles liaisons (respectivement l'acide oléïque ou linoléïque) obtenus à partir de tallol qui est un sous-produit de la fabrication de la pâte à papier. Après polymérisation de ces acides gras insaturés, on obtient un mélange technique contenant en moyenne 30-35 % en poids d'acides gras monocarboxyliques souvent isomérisés par rapport aux acides gras insaturés monocarboxyliques de départ, 60-65 % en poids d'acides dicarboxyliques (acides dimères) comprenant le double du nombre de carbone par rapport aux acides gras insaturés monocarboxyliques de départ. Par purification de ce mélange, on obtient les différents grades commerciaux d'acides dimères, monomères ou trimères. Ces acides gras dimères sont ensuite soumis à une réaction d'ammoniation réductrice (NH3/H2) en présence d'un catalyseur, permettant d'obtenir les amines grasses dimérisées.

Selon un mode de réalisation, la diamine (ou le mélange de diamines) B1 présente une masse molaire (moyenne) allant de 100 à 650 g/mole.

Selon un mode de réalisation de l'invention, la diamine ou le mélange de diamines B1 a une alcalinité primaire allant de 3,00 à 20,00 méq NH₂/g, de préférence de 9,00 à 15,00 méq/g.

La ou les polyamines B2 comprennent au moins trois groupements -CH2-NH2, de préférence au moins quatre groupements -CH2-NH2.

Selon un mode de réalisation, la ou les polyamines B2 sont choisies parmi les polyéthylèneimines (PEI), les polyéthylèneimines dendrimères, les polypropylèneimines (PPI), les polypropylèneimines dendrimères, les poly(propylène-éthylène)imines, les polyallylamines, la tris(aminoethyl)amine (TAEA) et la tris(aminopropyl)amine (TAPA). De préférence, la ou les polyamines B2 sont choisies parmi les polyéthylèneimines (PEI) et les poly(éthylène-propylène)imines.

La ou les polyamines B2 peuvent être choisies parmi les composés de structure : 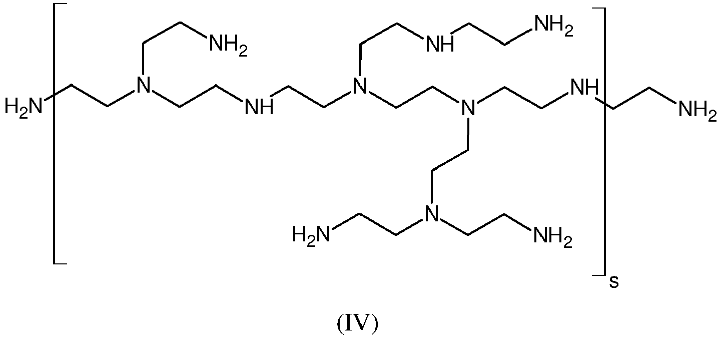 où s est un nombre entier, tel que la masse molaire est comprise dans la fourchette allant de 130 à 1800 g/mol, de préférence allant de 140 à 1700 g/mol ; 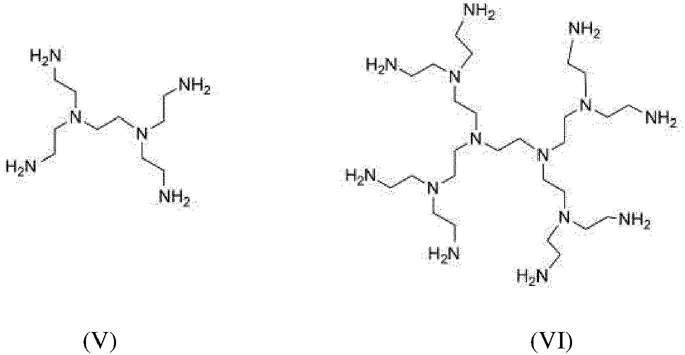 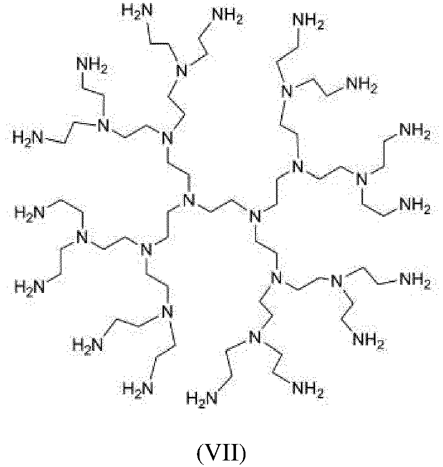 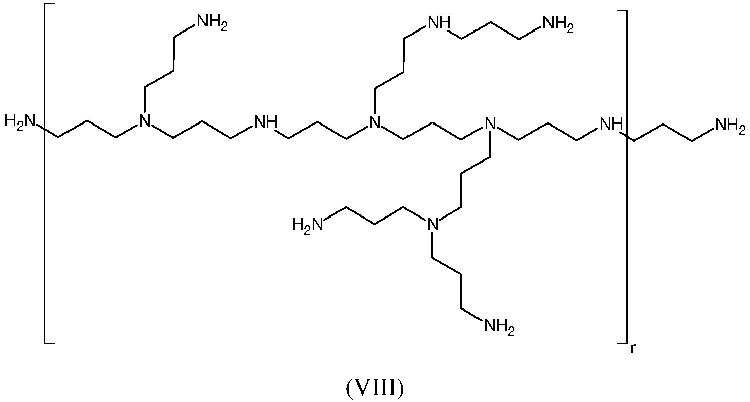 où r est un nombre entier, tel que la masse molaire est comprise dans la fourchette allant de 130 à 1800 g/mol, de préférence allant de 140 à 1700 g/mol ; 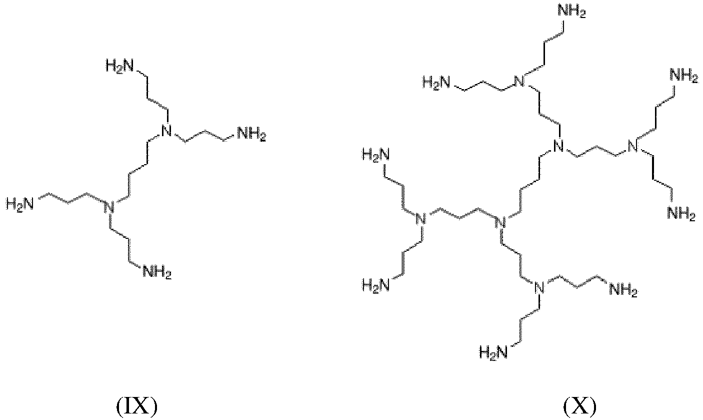 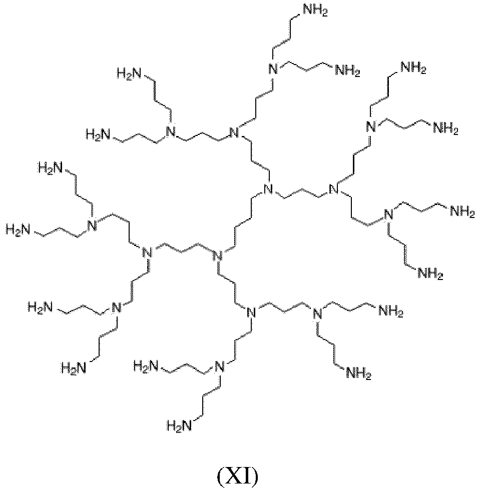 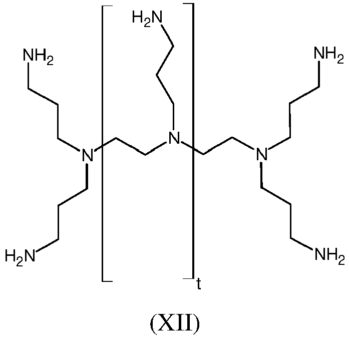 où t est un nombre entier, tel que la masse molaire est comprise dans la fourchette allant de 130 à 1800 g/mol, de préférence allant de 140 à 1700 g/mol; 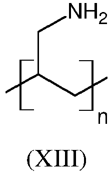 où n est un nombre entier allant de 3 à 20 ;

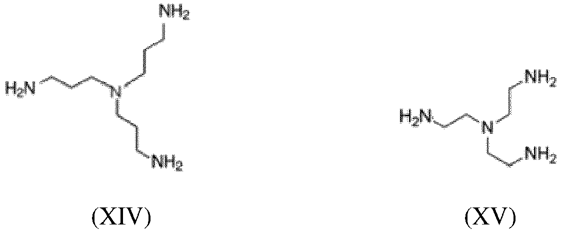

Selon un mode de réalisation, la polyamine ou le mélange de polyamines B2 a une alcalinité primaire allant de 8,00 à 21,00 méq/g, de préférence allant de 9,00 à 18,00 méq/g.

Selon un mode de réalisation de l'invention, la (ou les) polyamine(s) B2 présente(nt) une masse molaire (moyenne) allant de 130 à 1800 g/mol, de préférence allant de 140 à 1700 g/mol.

Selon un mode de réalisation, la composition B présente un rapport alcalinité primaire/alcalinité totale allant de 0,25 à 0,70.

Le ratio massique diamine B1: polyamine B2 dans la composition B va de 30/70 à 70/30, de préférence de 40/60 à 60/40, et mieux encore est d'environ 50/50.

La composition B peut être préparée par simple mélange des constituants, de préférence à une température allant de 10°C à 50°C, de préférence à température ambiante, de préférence à l'aide d'un mélangeur mécanique.

### Composition adhésive

Selon un mode de réalisation de l'invention, le ratio molaire NH₂/cyclocarbonate au sein de la composition adhésive (r3) va de 0,8 à 1,2, de préférence de 0,9 à 1,1, voire est d'environ 1,0.

Selon un mode de réalisation de l'invention, le ratio massique entre la composition A et la composition B, au sein de la composition adhésive, va de 100/3 à 100/50.

La composition adhésive selon l'invention peut comprendre au moins un catalyseur de réticulation. Le catalyseur de réticulation peut être présent dans la composition A et/ou dans la composition B, de préférence dans la composition A.

Le(s) catalyseur(s) de réticulation peu(ven)t être n'importe quel catalyseur habituellement utilisé(s) pour accélérer la réaction d'ouverture de cycle d'un composé comportant un groupe cyclocarbonate (2-oxo-1,3-dioxolan-4-yl)méthyl-carbamate par une amine primaire.

A titre d'exemple de catalyseur de réticulation utilisable selon l'invention, on peut citer :
- les alcoolates, tels que le ter-butylate de potassium ou le méthanolate de sodium ;
- les bases fortes choisis parmi :
   ∘ les phosphazènes tel que le 2-tert-butylimino-2-diéthylamino-1,3-diméthylperhydro-1,3,2-diazaphosphorure (BMEP),
   ∘ les guanidines telles que :
      le 1,5,7-triazabicyclo[4.4.0]dec-5-ene (TBD) : 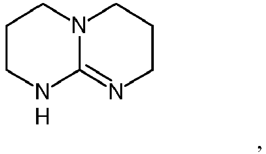
      le N-méthyl triazabicyclodécène (Me-TBD) : 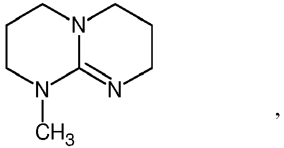
   o des amines tertiaires telles que :
      le 1,8-diazabicyclo[5.4.0]undec-7-ène (DBU) : 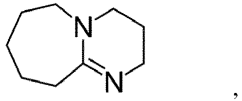
      le 1,5-diazabicyclo[4.3.0]non-5-ène (DBN) : 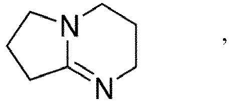
      l'éther diéthylique-2,2'-morpholine (DMDEE) : 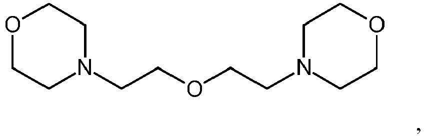
      le 1,4-diazabicyclo[2.2.2]octane (DABCO) :

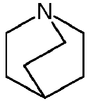

Une quantité allant de 0,03 à 3% en poids voire de 0,05 à 1% en poids, de catalyseur(s) de réticulation par rapport au poids total de la composition adhésive selon l'invention peut être utilisée.

Le(s) catalyseur(s) de réticulation peu(ven)t être réparti(s) dans une ou plusieurs des compositions (par exemple dans la composition A et/ou dans la composition B définies ci-dessus) formant la composition adhésive bicomposante selon l'invention.

La composition adhésive selon l'invention peut comprendre en outre au moins une charge minérale, de préférence en une quantité ne dépassant pas 70% en poids du poids de la composition adhésive. La ou les charges peut/peuvent être présente(s) dans la composition A et/ou dans la composition B.

La (ou les) charge(s) minérale(s) utilisable(s) est (sont) choisie(s) de manière à améliorer les performances mécaniques de la composition selon l'invention à l'état réticulée.

A titre d'exemple de charge(s) utilisable(s), on peut citer de manière non limitative le carbonate de calcium, le kaolin, la silice, le gypse, les microsphères et les argiles.

De préférence, la (ou les) charge(s) minérale(s) possède(nt) une taille de particule maximale, notamment un diamètre externe, inférieur(e) à 100 µm et de préférence inférieur(e) à 10 µm. De telles charges peuvent être sélectionnées de manière bien connue par l'homme du métier en utilisant des tamis de mailles appropriées.

La composition adhésive selon l'invention peut en outre comprendre au moins un promoteur d'adhésion choisi parmi les silanes, les aminosilanes ou les acryloyl silanes. Le ou les promoteurs d'adhésion peut/peuvent être présente(s) dans la composition A et/ou dans la composition B, de préférence dans la composition A.

La composition adhésive selon l'invention peut inclure jusqu'à 2% en poids d'un ou plusieurs additifs choisis de manière appropriée pour ne pas détériorer les propriétés de la composition adhésive selon l'invention à l'état réticulé. Ces additifs sont choisis parmi le groupe consistant en des antioxydants ou stabilisants UV (ultra-violet), des pigments, et des colorants. Ces additifs sont de préférence choisis parmi ceux habituellement utilisés dans des compositions adhésives.

Le(s) autres additif(s) peu(ven)t être répartie(s) dans un ou plusieurs des compositions formant la composition adhésive bicomposante selon l'invention.

### Kit prêt à l'emploi

La présente invention concerne également un kit prêt à l'emploi, comprenant la composition A telle que définie ci-dessus d'une part et la composition B telle que définie ci-dessus d'autre part, conditionnées dans deux compartiments séparés.

En effet, la composition adhésive selon l'invention peut se trouver sous une forme bi-composants, par exemple au sein d'un kit prêt à l'emploi, comprenant la composition A d'une part dans un premier compartiment ou fût et la composition B d'autre part dans un second compartiment ou fût, dans des proportions adaptées pour un mélange direct des deux compositions, par exemple à l'aide d'une pompe doseuse.

Selon un mode de réalisation de l'invention, le kit comprend en outre un ou plusieurs moyens permettant le mélange des deux compositions A et B. De préférence, les moyens de mélange sont choisis parmi des pompes doseuses, des mélangeurs statiques de diamètre adapté aux quantités utilisées.

### Structure multicouche (complexe)

La présente invention a également pour objet une structure multicouche (complexe) comprenant au moins deux couches de matériau liées entre elles par une couche adhésive, caractérisé en ce que ladite couche adhésive est constituée par la composition adhésive selon l'invention, à l'état réticulé.

La couche adhésive présente de préférence une épaisseur allant de 1,5 à 5 µm. La couche adhésive est obtenue par réticulation de la composition adhésive, à raison d'une quantité de préférence allant de 1,5 à 5 g/m².

Les matériaux dont sont constituées les couches de matériau entourant la couche adhésive sont généralement choisis parmi le papier, un métal, comme par exemple l'aluminium ou les polymères thermoplastiques tels que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère ou copolymère d'acide lactique (PLA), ou
- un polyhydroxyalkanoate (PHA).

Une couche individuelle de matériau peut être elle-même constituée de plusieurs matériaux. Il peut s'agir par exemple d'une couche de polymères thermoplastiques obtenue par coextrusion de deux polymères, les couches individuelles de polymère thermoplastique peuvent être en outre enduites d'une substance (par exemple à base d'oxyde d'aluminium ou d'oxyde de silicium) ou métallisée (cas du PET métallisé avec des particules d'aluminium) pour ajouter un effet barrière supplémentaire.

L'épaisseur des 2 couches de matériau adjacentes à la couche adhésive et des autres couches de matériau mises en œuvre dans la structure multicouche selon l'invention est susceptible de varier dans un large domaine allant par exemple de 5 à 150 µm. L'épaisseur totale de ladite structure est susceptible de varier également dans un large domaine allant par exemple de 20 à 400 µm.

De préférence, la structure multicouche se présente sous la forme d'un film multicouche.

### Procédé de complexage

L'invention a également pour objet un procédé de fabrication de la structure multicouche (complexe) selon l'invention comprenant les étapes suivantes :
- le mélange de la composition A et de la composition B, puis
- l'enduction dudit mélange sur la surface d'une première couche, puis
- le contrecollage de la surface d'une deuxième couche sur ladite surface enduite, puis
- la réticulation dudit mélange.

L'étape de mélange de la composition A et de la composition B peut être réalisée à température ambiante ou à chaud, avant enduction.

De préférence, le mélange est réalisé à une température inférieure à la température de dégradation des ingrédients compris dans l'une ou l'autre des compositions (A) et (B). En particulier, le mélange est réalisé à une température inférieure à 95°C, de préférence allant de 15 à 80°C, de préférence encore allant de 25°C à 50°C, afin d'éviter toute dégradation thermique.

De préférence, on mélange la composition A et la composition B dans des quantités telles que le rapport molaire du nombre de groupes amine primaire sur le nombre de groupes cyclocarbonate présents dans le mélange, noté r3, va de 0,8 à 1,2, de préférence de 0,9 à 1,1.

Selon un mode de réalisation, lorsqu'un solvant est présent dans les compositions A et/ou B et/ou lorsqu'un solvant est ajouté lors du mélange de la composition A et de la composition B, alors le procédé de complexage comprend une étape d'évaporation du ou des solvants, ladite étape d'évaporation de solvant(s) est alors effectuée avant réticulation du mélange, de préférence avant l'étape de contrecollage.

L'enduction dudit mélange peut être réalisée sur tout ou partie de la surface d'un matériau. En particulier, l'enduction dudit mélange peut être réalisée sous la forme d'une couche d'épaisseur allant de 1,5 à 5 µm. L'enduction est réalisée de préférence de manière continue ou substantiellement continue.

Eventuellement, la réticulation dudit mélange sur la surface du matériau peut-être accélérée en chauffant le(s) matériau(x) enduit(s) à une température inférieure ou égale à 70°C. Le temps requis pour compléter cette réaction de réticulation et assurer ainsi le niveau de cohésion requis est en général de l'ordre de 0,5 à 24 heures.

L'enduction et le contrecollage du second matériau sont généralement effectués dans un intervalle de temps compatible avec le procédé d'enduction, comme il est bien connu de l'homme du métier, c'est-à-dire avant que la couche d'adhésif perde sa capacité à fixer par collage les deux matériaux.

### Utilisation de la structure multicouche

L'invention concerne enfin l'utilisation de la structure multicouche (complexe) selon l'invention pour la fabrication d'emballages flexibles. Les complexes selon l'invention sont en effet utilisables pour la fabrication d'emballages flexibles les plus divers, qui sont mis en forme puis fermés (après l'étape de conditionnement du produit destiné au consommateur) par des techniques de thermoscellage (ou thermosoudage).

En particulier, le complexe selon l'invention peut être utilisé dans l'emballage alimentaire, sans risque de toxicité. Les emballages à destination alimentaire sont généralement traités thermiquement à des températures allant de 60°C à 135°C avant utilisation. En particulier, ils peuvent être pasteurisés (à des températures allant de 70°C à moins de 100°C, par exemple de 70°C à 99°C) ou stérilisés (à des températures allant de 100°C à 135°C).

La structure multicouche selon l'invention présente l'avantage de pouvoir être pasteurisé ou stérilisé.

L'invention est à présent décrite dans les exemples de réalisation suivants qui sont donnés à titre purement illustratif, et ne sauraient être interprétés pour en limiter la portée.

### EXEMPLES

Les ingrédients suivants ont été utilisés :

### Composition A

- Voranol® P 400 : polypropylène glycol difonctionnel présentant un indice hydroxyle IOH allant de 250 à 270 mg KOH/g (disponible auprès de la société Dow) ;
   Voranol® CP 450 : polypropylène glycol trifonctionnel présentant un indice hydroxyle IOH allant de 370 à 396 mg KOH/g (disponible auprès de la société Dow) ;
- Realkyd® XTR 10410 : polyester polyol difonctionnel présentant un indice hydroxyle IOH allant de 108 à 116 mg KOH/g (disponible auprès de la société Arkema) ;
- Scuranate® TX : toluène diisocyanate (TDI) présentant 48,1% en poids de fonctions NCO et comprenant 95% en poids d'isomère 2,4-TDI (disponible auprès de la société Vencorex) ;
- Desmodur® N3300 : isocyanurate de hexaméthylène diisocyanate (HDI) (disponible auprès de la société Covestro) ;
- Jeffsol® GC : carbonate de glycérol présentant une pureté de 93% en poids (disponible auprès de la société Huntsman) ;
- acétate d'éthyle : solvant
- Borchi Kat® 315 : catalyseur à base de néodécanoate de bismuth (disponible auprès de la société Borchers) ;
- Tyzor Pita® : catalyseur à base d'éthyl-acétoacétate de titane (disponible auprès de la société Dorf Ketal) ;
- Silquest® A1110: promoteur d'adhésion de type (3-aminopropyl)triméthoxysilane (disponible auprès de la société Momentive).

Le(s) polyol(s) est (sont) séché(s) avant d'être mis en réaction avec le(s) polyisocyanate(s) utilisé(s) pour la synthèse du prépolymère de polyuréthane.

### Composition B

- Jeffamine® ED 148 (disponible auprès de la société Huntsman) : diamine (de type B1) présentant une masse molaire de 148,20 g/mol et une alcalinité primaire de 13,49 méq/g et répondant à la formule H₂N-CH₂-CH₂-O-CH₂-CH₂-O-CH₂-CH₂-NH₂. Jeffamine® ED 148 présente un rapport alcalinité primaire/alcalinité totale de 1,00 déterminé par potentiométrie ;
- Lupasol® FG (disponible auprès de la société BASF) : polyamine (de type B2) présentant une masse molaire de 800 g/mol et une alcalinité primaire de 9,75 méq/g et répondant à la formule générale (IV): 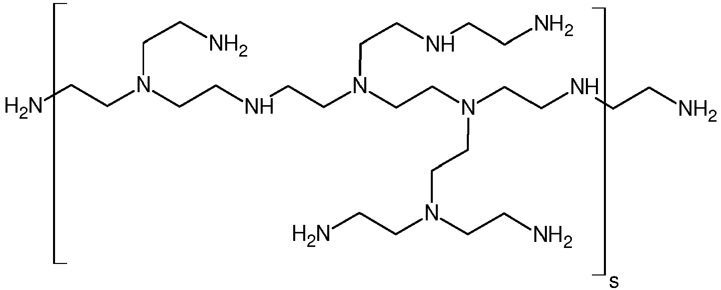 s étant tel que défini précédemment.

Lupasol® FG présente un rapport alcalinité primaire/alcalinité totale de 0,42 déterminé par RMN ¹³C.
- H₂N-(CH₂)₁₀-NH₂: diamine (de type B1) présentant une masse molaire de 172 g/mol et une alcalinité primaire de 11,61 méq/g.

H₂N-(CH₂)₁₀-NH₂ présente un rapport alcalinité primaire/alcalinité totale de 1,00, déterminé par potentiométrie.

### Exemple 1 : Préparation d'une composition A-1 à base d'un prépolymère de polyuréthane à terminaisons cyclocarbonate à base de polyéther polyols et de polyester polyols

On introduit dans un réacteur 190,7 g de Scuranate® TX et chauffe à 40°C. On introduit ensuite tour à tour 22,7 g de Voranol® CP 450, puis 103,3 g de Voranol® P 400 en veillant à ce que la température du mélange ne dépasse pas 80°C. Lorsque la température de mélange est stabilisée, on chauffe le mélange pendant environ 1 heure à 80-85°C puis on refroidit à 70°C. On introduit ensuite 321,6 g de Realkyd® XTR 10410 en veillant à ce que la température du mélange ne dépasse pas 90°C.

Le mélange est maintenu environ 3 heures à 90°C. La fin de la réaction est suivie en contrôlant le pourcentage massique de fonctions NCO dans le milieu, ce dernier devant être en théorie d'environ 5,7 %. Lorsque la réaction est terminée, on refroidit le mélange à 70°C et on introduit 103,4 g de carbonate de glycérol et 0,5 g de Tizor Pita®. On ajoute 100 g d'acétate d'éthyle et 7,5 g de Silquest® A1110 puis le mélange est maintenu à 70°C pendant 6 à 8 heures jusqu'à ce qu'il n'y ait plus de fonction NCO visibles à l'Infra-Rouge (IR) (disparition de la bande caractéristique de la fonction NCO à environ 2250 cm⁻¹).

Lorsque le pourcentage massique de fonctions NCO est inférieur à 0,1% (plus de bande NCO visible), on introduit 150 g d'acétate d'éthyle. On mesure à J+1, soit 24 heures après la fin de la réaction (disparition de la bande NCO visibles à l'IR), la viscosité de la composition A-1 ainsi obtenue, à l'aide d'un viscosimètre Brookfield (aiguille 3, 20 tr/mn). La viscosité de la composition A-1 à 23°C est d'environ 3900 mPa.s.

La teneur en fonction cyclocarbonate du prépolymère de polyuréthane à terminaisons cyclocarbonate est de 0,82 méq/g environ.

### Exemple 2 : Préparation d'une composition A-2 à base d'un prépolymère de polyuréthane à terminaisons cyclocarbonate à base de polyéther polyols et de polyester polyols

On introduit dans un réacteur 143,2 g de de Scuranate® TX et chauffe à 40°C.

On introduit lentement 22,6 g de Voranol® CP 450 et on chauffe le mélange à 50°C. On ajoute ensuite 101,6 g de Voranol® P 400. La masse réactionnelle monte en exotherme jusqu'à environ 70°C. Une fois l'exotherme maîtrisé, on maintient le mélange à 70°C. Au bout d'une heure de réaction, on introduit 241,4 g de Realkyd® XTR 10410. La masse réactionnelle monte en exotherme jusqu'à environ 85°C. Le mélange est maintenu environ 2-3 heures à 85°C. La fin de la réaction est suivie en contrôlant le pourcentage massique de fonctions NCO dans le milieu, ce dernier devant être en théorie d'environ 4,4% en poids. Lorsque la réaction est terminée, on refroidit le mélange à 70°C et on introduit 76,6 g de Desmodur® N3300 et 100 g d'acétate d'éthyle. On homogénéise le mélange pendant 20 minutes puis on ajoute 114 g de Jeffsol® GC. On ajoute 0,45 g de Tizor Pita®, puis le mélange est maintenu à 80-85°C pendant 3 heures jusqu'à ce qu'il n'y ait plus de fonction NCO visibles à l'IR (disparition de la bande caractéristique de la fonction NCO à environ 2250 cm⁻¹).

Lorsque le pourcentage massique de fonction NCO est inférieur à 0,1% (plus de bande NCO visible), on introduit 200g d'acétate d'éthyle. On mesure à J+1, soit 24 heures après la fin de la réaction (disparition de la bande NCO visibles à l'IR), la viscosité de la composition A-2 ainsi obtenue, à l'aide d'un viscosimètre Brookfield (aiguille 3, 20 tr/mn). La viscosité de la composition A-2 à 23°C est d'environ 3000 mPa.s.

La teneur en fonction cyclocarbonate du prépolymère à terminaisons cyclocarbonate est de 0,90 méq/g environ.

### Exemple 3 : Préparation des compositions B

Les compositions B qui ont été testées ont été préparées par simple mélange de la diamine B1 (Jeffamine® ED 148 ou H₂N-(CH₂)₁₀-NH₂) et/ou de la polyamine B2 (Lupasol® FG) à une température ambiante (environ 23°C) dans un rapport pondéral B1/B2 indiqué ci-dessous dans le tableau 1.

### Exemple 4 : Préparation des compositions adhésives

Le mélange des compositions A et B détaillées aux exemples 1 à 3 a été effectué dans un rapport pondéral A/B indiqué ci-dessous dans le tableau 1.

**Tableau 1 : caractéristique des compositions adhésives testées**

| | nature de A | nature de B | ratio B1/B2 | ratio A/B | ratio molaire NH₂/CC |
|---|---|---|---|---|---|
| Composition 1 (comparative) | A-1 | Jeffamine® ED148 | - | 100/6,5 | 0,93 |
| Composition 2 (comparative) | A-1 | B2 | - | 100/7 | 0,83 |
| Composition 3 | A-1 | Jeffamine® ED148+ B2 | 1/1 | 100/6,8 | 0,96 |
| Composition 4 | A-1 | H₂N-(CH₂)₁₀-NH₂+ B2 ⁽¹⁾ | 1/1 | 100/25 | 0.94 |
| Composition 5 | A-2 | Jeffamine® ED148 + B2 | 1/1 | 100/8,3 | 0,93 |
| Composition 6 (comparative) | A-2 | Jeffamine® ED148 + B2 | 8/2 | 100/7,6 | 0,93 |

| | | | | | |
|---|---|---|---|---|---|
| ⁽¹⁾ : la composition B comprenant le mélange de B1 et de B2 a été diluée à 29% en poids dans un solvant éthanol. | | | | | |

Les compositions 1 à 6 ont été préparées soit à partir de la composition A de l'exemple 1 (A-1) soit à partir de la composition A de l'exemple 2 (A-2).

Les compositions 3 à 5 selon l'invention, ont été préparées à partir d'une composition B comprenant une diamine de type B1 et une polyamine de type B2.

Les compositions 1 et 2, comparatives, ont été préparées respectivement, à partir de la diamine B1 (composition 1) et de la polyamine B2 (composition 2).

La composition 6, comparative, a été préparée à partir d'une composition B dont le rapport massique B1/B2 est trop élevé.

Le ratio NH₂/CC représente le rapport molaire du nombre de fonctions amine primaire sur le nombre de fonctions cyclocarbonate présentes dans la composition adhésive (A+B).

### Exemple 5 : Préparation des complexes

- Préparation des supports : les couches de matériau sont découpées au format désiré et agrafés sur une fiche Bristol.
- Préparation de la composition adhésive : la composition A et la composition B sont mélangées dans un flacon en verre, avec un éventuel ajout d'acétate d'éthyle. Dans ce dernier cas, l'extrait sec de la composition adhésive est d'environ 30% en poids pour avoir un grammage de l'ordre de 3,5 à 5 g/m² pour chacune des interfaces entre deux subtrats.
- Réalisation de la structure multicouche (complexe) :
   ▪ On applique la colle sur une couche aluminium renforcé avec du PolyEthylène Téréphtalate (PET) à l'aide d'un applicateur avec une barre de Mayer,
   ▪ On met des pinces pour maintenir le support sur le Bristol du coté non agrafé et on place le support dans une étuve ventilée 2 minutes à 105°C pour évaporer le solvant,
   ▪ On agrafe ensemble sur un bord le support encollé et le support à contrecoller. On enlève les pinces et contrecolle à l'aide d'un rouleur presseur,
   ▪ On place le complexe sous une presse et le laisse réticuler soit à température ambiante soit dans une étuve ventilée à 40°C sous une presse (plaques métalliques).

Différents complexes ont été préparés en utilisant un système tricouches PET12/ALU9/CPP70 défini ci-après, chaque couche étant séparée par une couche adhésive telle que détaillée dans le tableau 2 ci-dessous :

**Tableau 2 : caractéristique des complexes**

| | Composition adhésive | grammage (g/m²) |
|---|---|---|
| Film 1 | Composition 1 (comparative) | 4,3 |
| Film 2 | Composition 2 (comparative) | 4,3 |
| Film 3 | Composition 3 | 4,5 |
| Film 4 | Composition 4 | 3,8 |
| Film 5 | Composition 5 | 4,5 |
| Film 6 | Composition 6 (comparative) | 4,8 |

PET12/ALU9/CPP70 : système constitué d'une couche de polyéthylène térephtalate de 12 µm d'épaisseur (PET12), d'une couche de polypropylène coulé (« cast polypropylene » en anglais) de 70 µm d'épaisseur (CPP70) et d'une couche mince d'aluminium de 9 µm d'épaisseur (ALU9) positionnée entre les deux couches PET12 et CPP70.

### Exemple 6 : Mesure de la cohésion des complexes de l'exemple 5 avant et après essai de stérilisation et appréciation qualitative de la résistance desdits complexes à la stérilisation

### Pelage à 180° (mesure de la cohésion):

La cohésion du complexe est évaluée par le test de pelage à 180° tel que décrit dans la norme française NF T 54-122. Le principe de ce test consiste en la détermination de la force nécessaire à la séparation (ou pelage) de 2 couches individuelles de complexe liées par l'adhésif.

Une éprouvette de forme rectangulaire de 15 mm de large et d'environ 15 cm de long est découpée dans le complexe bicouche. La découpe des éprouvettes se fait dans le sens machine de l'enduction. On décolle manuellement à partir de l'extrémité de cette éprouvette, et sur environ 2 cm, les 2 couches individuelles de complexe comprises dans cette bande et les 2 extrémités libres ainsi obtenues sont fixées sur deux dispositifs d'attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches dont les extrémités décollées se déplacent progressivement selon un axe vertical en formant un angle de 180°, la partie fixe -reliée à un dynamomètre DY30- mesure la force supportée par l'éprouvette ainsi maintenue, et mesurée en Newton (N).

Chaque test est répété 3 fois et la valeur moyenne des trois mesures est indiquée dans le tableau 3 ci-dessous.

La mesure de la cohésion avant stérilisation a été effectuée 7 jours après la fabrication du film multicouche (J+7).

Comme illustré dans le tableau 3 ci-dessous, la cohésion a également été mesurée 24 heures après stérilisation.

### Appréciation qualitative de la résistance à la stérilisation :

On a également évalué la qualité de l'adhésion entre les couches de matériau des structures multicouches testées, après stérilisation.

En particulier, on a noté la présence ou non de boursouflures, pouvant être de formes diverses (par exemple des canaux ou cloques) ou bulles. La présence de ces déformations de la structure multicouche traduit l'infiltration d'eau entre les couches de la structure multicouche résultant de la dégradation de l'adhésif au cours de la stérilisation.

En outre, on a vérifié si l'adhésif s'est déréticulé au cours de la stérilisation. Pour cela, après avoir réalisé le test de pelage décrit plus haut sur chacun des films testés, on a évalué la présence ou non de tack (pouvoir collant) en exerçant une légère pression de l'index sur la surface de la couche de colle laissée apparente après séparation des couches de matériau.

Les observations ont été consignées dans le tableau 3 ci-dessous.

### Test de stérilisation

Dans le présent exemple, le test de stérilisation a été effectué une fois l'adhésif réticulé au sein du complexe (environ 7 jours après préparation du complexe conformément à l'exemple 5). Des sachets ont été préparés à partir d'un complexe préparé à l'exemple 5, sans sceller le quatrième côté. Les sachets sont placés sur la grille d'un autoclave (phase vapeur) et laissés 1 heure à 130°C dans l'autoclave sous 3 bars.

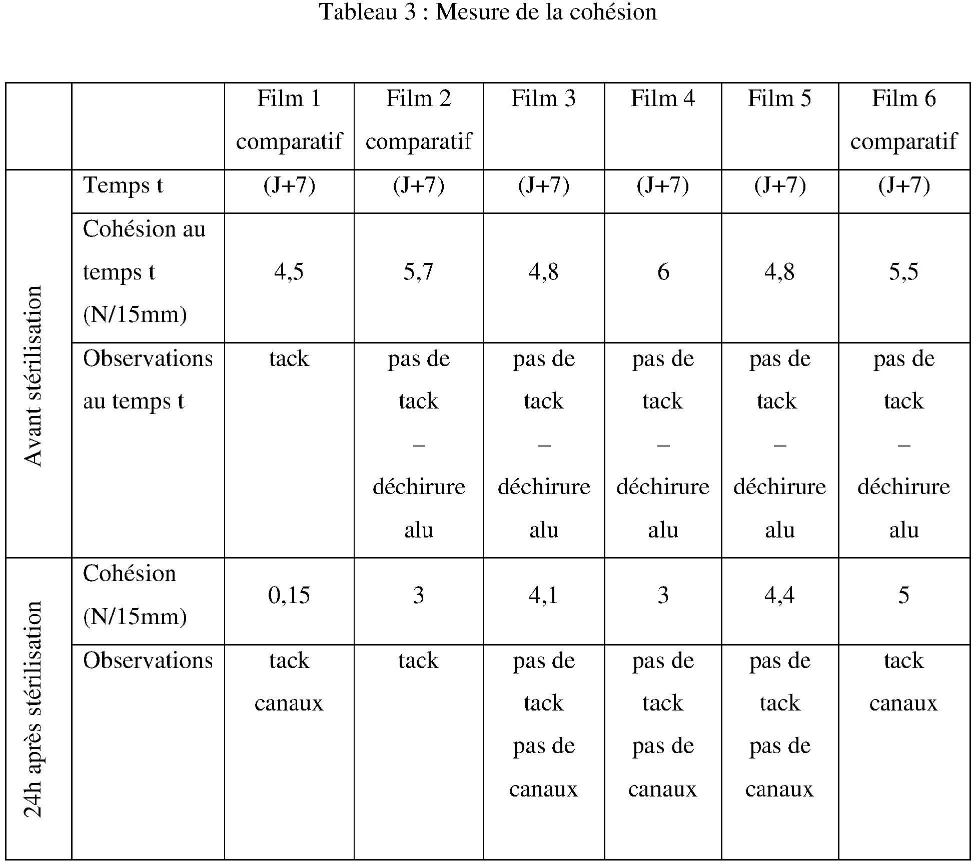

Dans le tableau 3 ci-dessus :
- lorsqu'il est observé « pas de tack », alors le film passe le test de stérilisation,
- lorsqu'il est observé un « tack », alors le film ne passe pas le test de stérilisation,
- lorsqu'il est observé des canaux, alors le film ne passe pas le test de stérilisation.
- lorsqu'il est observé une déchirure, alors le film passe le test de stérilisation.

## Revendications

1. Composition adhésive consistant en :
- une composition A consistant en :
- au moins un prépolymère polyuréthane à terminaison cyclocarbonate ;
- optionnellement au moins un catalyseur de réticulation,
- optionnellement au moins une charge minérale,
- optionnellement au moins un promoteur d'adhésion choisi parmi le groupe consistant en les silanes, les aminosilanes ou les acryloyl silanes,
- optionnellement au moins un additif choisi parmi le groupe consistant des antioxydants ou stabilisants ultra-violet, des pigments et des colorants, et
au moins un solvant choisi parmi les solvants organiques et alcooliques et
- une composition B consistant en :
- au moins une diamine B1 comprenant uniquement deux groupements -CH2-NH2 et au moins une polyamine B2 comprenant au moins trois groupements -CH2-NH2, présents dans un ratio massique diamine B l:polyamine B2 de 30/70 à 70/30,
- optionnellement au moins un catalyseur de réticulation,
- optionnellement au moins une charge minérale,
- optionnellement au moins un promoteur d'adhésion choisi parmi le groupe consistant en les silanes, les aminosilanes ou les acryloyl silanes,
- optionnellement au moins un additif choisi parmi le groupe consistant des antioxydants ou stabilisants ultra-violet, des pigments et des colorants,
dans laquelle le rapport molaire du nombre de fonctions amine primaire sur le nombre de fonctions cyclocarbonate va de 0,8 à 1,2 ;
la composition adhésive comprenant jusqu'à 2 % en poids, par rapport au poids total de la composition adhésive, dudit au moins un additif, si présent ; et
ledit prépolymère polyuréthane à terminaison cyclocarbonate étant préparé par un procédé comprenant les étapes suivantes :
E1) la préparation d'un prépolymère polyuréthane à terminaisons NCO par une réaction de polyaddition :
i) d'au moins un polyisocyanate choisi parmi les diisocyanates et les triisocyanates,
ii) avec au moins un polyol choisi parmi les polyéther polyols et les polyester polyols, et leurs mélanges ; suivie de
E2) la réaction du produit formé à la première étape E1) avec au moins un cyclocarbonate de glycérol en une quantité telle que l'ensemble des groupes NCO présents dans le milieu réactionnel à l'issue de l'étape E1) réagissent en présence du carbonate de glycérol.

2. Composition adhésive selon la revendication 1, dans laquelle au moins un polyol est choisi parmi les polyester polyols.

3. Composition adhésive selon l'une quelconque des revendications 1 et 2, dans laquelle la diamine ou le mélange de diamines B1 présente une alcalinité primaire allant de 3,00 à 20,00 méq/g, de préférence allant de 9,00 à 15,00 méq/g.

4. Composition adhésive selon l'une quelconque des revendications 1 à 3, dans laquelle la polyamine ou le mélange de polyamine B2 présente une alcalinité primaire 8,00 à 21,00 méq/g, de préférence allant de 9,00 à 18,00 méq/g.

5. Composition adhésive selon l'une quelconque des revendications 1 à 4, dans laquelle la composition B présente un ratio alcalinité primaire sur alcalinité totale allant de 0,25 à 0,70.

6. Composition adhésive selon l'une quelconque des revendications 1 à 5, dans laquelle le rapport molaire du nombre de fonctions amine primaire sur le nombre de fonctions cyclocarbonate va de 0,9 à 1,1.

7. Kit prêt à l'emploi comprenant la composition adhésive selon l'une des revendications 1 à 6, **caractérisé en ce que** les compositions A et B sont conditionnées dans deux compartiments distincts.

8. Structure multicouche comprenant au moins deux couches de matériau liées entre elles par une couche adhésive, **caractérisé en ce que** ladite couche adhésive est constituée par la composition adhésive selon l'une quelconque des revendications 1 à 6, à l'état réticulé.

9. Structure multicouche selon la revendication 8, dans laquelle la couche adhésive présente une épaisseur allant de 1,5 à 5 µm.

10. Structure multicouche selon la revendication 8 ou 9, comprenant au moins une couche de matériau à base d'aluminium.

11. Procédé de fabrication d'une structure multicouche selon l'une quelconque des revendications 8 à 10, comprenant les étapes suivantes :
- le mélange de la composition A et de la composition B, puis
- l'enduction dudit mélange sur la surface d'une première couche de matériau, puis
- le contrecollage de la surface d'une deuxième couche de matériau sur ladite surface enduite, puis
- la réticulation dudit mélange.

12. Procédé de fabrication selon la revendication 11, dans lequel le mélange de la composition A et de la composition B comprend au moins un solvant et dans lequel le procédé comprend en outre une étape d'évaporation du ou des solvants.

## Patentansprüche

1. Klebstoffzusammensetzung, bestehend aus:
- einer Zusammensetzung A, bestehend aus:
- mindestens einem Polyurethan-Prepolymer mit Cyclocarbonat-Endgruppen;
- gegebenenfalls mindestens einem Vernetzungskatalysator,
- gegebenenfalls mindestens einem mineralischen Füllstoff,
- gegebenenfalls mindestens einem Haftvermittler aus der Gruppe bestehend aus Silanen, Aminosilanen und Acryloylsilanen,
- gegebenenfalls mindestens einem Additiv aus der Gruppe bestehend aus Antioxidantien oder Ultraviolettstabilisatoren, Pigmenten und Farbmitteln und
- mindestens einem Lösungsmittel aus der Gruppe bestehend aus organischen und alkoholischen Lösungsmitteln, und
- einer Zusammensetzung B, bestehend aus:
- mindestens einem Diamin B1 mit nur zwei -CH₂-NH₂-Gruppen und mindestens einem Polyamin B2 mit mindestens drei -CH₂-NH₂-Gruppen, die in einem Massenverhältnis von Diamin B1:Polyamin B2 von 30/70 bis 70/30 vorliegen,
- gegebenenfalls mindestens einem Vernetzungskatalysator,
- gegebenenfalls mindestens einem mineralischen Füllstoff,
- gegebenenfalls mindestens einem Haftvermittler aus der Gruppe bestehend aus Silanen, Aminosilanen und Acryloylsilanen,
- gegebenenfalls mindestens einem Additiv aus der Gruppe bestehend aus Antioxidantien oder Ultraviolettstabilisatoren, Pigmenten und Farbmitteln,
wobei das Molverhältnis der Zahl von primären Aminfunktionen zur Zahl von Cyclocarbonatfunktionen im Bereich von 0,8 bis 1,2 liegt;
wobei die Klebstoffzusammensetzung bis zu 2 Gew.-%, bezogen auf das Gesamtgewicht der Klebstoffzusammensetzung des mindestens einen Additivs umfasst, sofern vorhanden; und
wobei das Polyurethan-Prepolymer mit Cyclocarbonat-Endgruppen durch ein Verfahren hergestellt wird, das die folgenden Schritte umfasst:
E1) die Herstellung eines Polyurethan-Prepolymers mit NCO-Endgruppen durch eine Polyadditionsreaktion:
i) von mindestens einem Polyisocyanat, das aus Diisocyanaten und Triisocyanaten ausgewählt ist,
ii) mit mindestens einem Polyol, das aus Polyetherpolyolen und Polyesterpolyolen und Mischungen davon ausgewählt ist; gefolgt von
E2) der Umsetzung des im ersten Schritt E1) gebildeten Produkts mit mindestens einem Glycerincyclocarbonat in einer solchen Menge, dass alle am Ende von Schritt E1) im Reaktionsmedium vorliegenden NCO-Gruppen in Gegenwart des Glycerincyclocarbonats reagieren.

2. Klebstoffzusammensetzung nach Anspruch 1, wobei mindestens ein Polyol aus Polyesterpolyolen ausgewählt ist.

3. Klebstoffzusammensetzung nach einem der Ansprüche 1 und 2, wobei das Diamin bzw. die Mischung von Diaminen B1 eine primäre Alkalinität im Bereich von 3,00 bis 20,00 meq/g, vorzugsweise im Bereich von 9,00 bis 15,00 meq/g, aufweist.

4. Klebstoffzusammensetzung nach einem der Ansprüche 1 bis 3, wobei das Polyamin bzw. die Mischung von Polyaminen B2 eine primäre Alkalinität im Bereich von 8,00 bis 21,00 meq/g, vorzugsweise im Bereich von 9,00 bis 18,00 meq/g, aufweist.

5. Klebstoffzusammensetzung nach einem der Ansprüche 1 bis 4, wobei die Zusammensetzung B ein Verhältnis von primärer Alkalinität zu Gesamtalkalinität im Bereich von 0,25 bis 0,70 aufweist.

6. Klebstoffzusammensetzung nach einem der Ansprüche 1 bis 5, wobei das Molverhältnis der Zahl von primären Aminfunktionen zur Zahl von Cyclocarbonatfunktionen im Bereich von 0,9 bis 1,1 liegt.

7. Gebrauchsfertiges Kit, umfassend die Klebstoffzusammensetzung nach einem der Ansprüche 1 bis 6, **dadurch gekennzeichnet, dass** die Zusammensetzungen A und B in zwei separaten Kompartimenten verpackt sind.

8. Mehrschichtstruktur mit mindestens zwei Materialschichten, die durch eine Klebstoffschicht miteinander verbunden sind, **dadurch gekennzeichnet, dass** die Klebstoffschicht aus der Klebstoffzusammensetzung nach einem der Ansprüche 1 bis 6 in vernetztem Zustand besteht.

9. Mehrschichtstruktur nach Anspruch 8, wobei die Klebstoffschicht eine Dicke im Bereich von 1,5 bis 5 µm aufweist.

10. Mehrschichtstruktur nach Anspruch 8 oder 9 mit mindestens einer Materialschicht auf Basis von Aluminium.

11. Verfahren zur Herstellung einer Mehrschichtstruktur nach einem der Ansprüche 8 bis 10, das die folgenden Schritte umfasst:
- Mischen der Zusammensetzung A und der Zusammensetzung B, dann
- Beschichten der Oberfläche einer ersten Materialschicht mit der Mischung, dann
- Auflaminieren der Oberfläche einer zweiten Materialschicht auf die beschichtete Oberfläche, dann
- Vernetzen der Mischung.

12. Herstellungsverfahren nach Anspruch 11, wobei die Mischung der Zusammensetzung A und der Zusammensetzung B mindestens ein Lösungsmittel umfasst und wobei das Verfahren außerdem einen Schritt des Verdampfens des Lösungsmittels bzw. der Lösungsmittel umfasst.

## Claims

1. Adhesive composition comprising:
- a composition A consisting of:
- at least one cyclocarbonate-terminated polyurethane prepolymer;
- optionally at least one crosslinking catalyst,
- optionally at least one mineral filler,
- optionally at least one adhesion promoter selected from the group consisting of silanes, aminosilanes or acryloyl silanes,
- optionally at least one additive selected from the group consisting of ultraviolet stabilizers or antioxidants, pigments and dyes, and
at least one solvent selected from organic and alcoholic solvents and
- a composition B consisting of:
- at least one diamine B1 comprising only two -CH₂-NH₂ groups, and
at least one polyamine B2 comprising at least three -CH₂-NH₂ groups, present in a diamine B1:polyamine B2 weight ratio of from 30/70 to 70/30,
- optionally at least one crosslinking catalyst,
- optionally at least one mineral filler,
- optionally at least one adhesion promoter selected from the group consisting of silanes, aminosilanes or acryloyl silanes,
- optionally at least one additive selected from the group consisting of ultraviolet stabilizers or antioxidants, pigments and dyes,
in which the molar ratio of the number of primary amine functions to the number of cyclocarbonate functions ranges from 0.8 to 1.2;
the adhesive composition comprising up to 2% by weight, relative to the total weight of the adhesive composition, of said at least one additive, if present; and
said cyclocarbonate-terminated polyurethane prepolymer being prepared by a process comprising the following steps:
E1) the preparation of an NCO-terminated polyurethane prepolymer by a polyaddition reaction:
i) of at least one polyisocyanate selected from diisocyanates and triisocyanates,
ii) with at least one polyol selected from polyether polyols and polyester polyols, and mixtures thereof; followed by
E2) the reaction of the product formed in the first step E1) with at least one glycerol cyclocarbonate in an amount such that all of the NCO groups present in the reaction medium at the end of step E1) react in the presence of the glycerol carbonate.

2. Adhesive composition according to Claim 1, in which at least one polyol is selected from polyester polyols.

3. Adhesive composition according to either one of Claims 1 and 2, in which the diamine or the mixture of diamines B1 has a primary alkalinity ranging from 3.00 to 20.00 meq/g, preferably ranging from 9.00 to 15.00 meq/g.

4. Adhesive composition according to any one of Claims 1 to 3, in which the polyamine or the mixture of polyamines B2 has a primary alkalinity from 8.00 to 21.00 meq/g, preferably ranging from 9.00 to 18.00 meq/g.

5. Adhesive composition according to any one of Claims 1 to 4, in which the composition B has a ratio of the primary alkalinity to the total alkalinity ranging from 0.25 to 0.70.

6. Adhesive composition according to any one of Claims 1 to 5, in which the molar ratio of the number of primary amine functions to the number of cyclocarbonate functions ranges from 0.9 to 1.1.

7. Ready-to-use kit comprising the adhesive composition according to one of Claims 1 to 6, **characterized in that** the compositions A and B are packaged in two separate compartments.

8. Multilayer structure comprising at least two layers of material bonded together by an adhesive layer, **characterized in that** said adhesive layer consists of the adhesive composition according to any one of Claims 1 to 6, in the crosslinked state.

9. Multilayer structure according to Claim 8, in which the adhesive layer has a thickness ranging from 1.5 to 5 µm.

10. Multilayer structure according to Claim 8 or 9, comprising at least one layer of aluminium-based material.

11. Process for manufacturing a multilayer structure according to any one of Claims 8 to 10, comprising the following steps:
- the mixing of the composition A and of the composition B, then
- the coating of said mixture over the surface of a first layer of material, then
- the laminating of the surface of a second layer of material over said coated surface, then
- the crosslinking of said mixture.

12. Manufacturing process according to Claim 11, in which the mixture of the composition A and the composition B comprises at least one solvent and in which the process further comprises a step of evaporating the solvent(s) .
